# EUROPEAN PATENT APPLICATION

(11) **EP 3 354 871 A1**
(43) Date of publication of application: **01.08.2018**
(21) Application number: 16854919.4
(22) Date of filing: 11.10.2016
(51) Int. Cl.: F01M 11/04

(54) **ENGINE OIL TOP-UP SYSTEM AND OIL TOP-UP METHOD THEREFOR**

(30) Priority: 16.10.2015 CN 201510671078
(71) Applicant: Huawei Technologies Co., Ltd., Longgang District Shenzhen, Guangdong 518129 (CN)
(72) Inventor: ZHANG, Hongzhan, Shenzhen Guangdong 518129 (CN); QIN, Xiaobing, Shenzhen Guangdong 518129 (CN)
(74) Representative: Körber, Martin Hans
(86) International application number: PCT/CN2016/101737
(87) International publication number: WO 2017/063541

(57) **Abstract**

An engine oil replenishment system and an oil replenishment method for an engine oil replenishment system are provided, and relate to the field of engine technologies. The system includes: an oil pan (201), an auxiliary oil tank (202), and an oil replenishment chamber (203) disposed on an upper portion of the auxiliary oil tank (202), where the oil pan (201) is connected to the oil replenishment chamber (203) by using an oil replenishment tube (204), the oil replenishment tube (204) is disposed with a first one-way valve (205), and the oil replenishment chamber (203) is connected to the auxiliary oil tank (202) by using an oil inlet tube (206). The oil replenishment tube (204) is disposed with the first one-way valve (205), thereby ensuring that lube oil in the oil pan (201) does not flow into the oil replenishment chamber (203), and no white vapor is emitted from an oil inlet (210) of the auxiliary oil tank (202).

## Description

This application claims priority to Chinese Patent No. 201510671078.0 filed with the Chinese Patent Office on October 16, 2015 and entitled "ENGINE OIL REPLENISHMENT SYSTEM AND OIL REPLENISHMENT METHOD FOR ENGINE OIL REPLENISHMENT SYSTEM", which is incorporated herein by reference in its entirety.

### TECHNICAL FIELD

The present invention relates to the field of engine technologies, and in particular, to an engine oil replenishment system and an oil replenishment method for an engine oil replenishment system.

### BACKGROUND

Most communications machine sets such as communications base stations are located in remote areas in which transportation is inconvenient. To reduce operating costs, a maintenance interval for a communications machine set should be prolonged as much as possible. There are three major measures for prolonging the maintenance interval for the communications machine set: a large-capacity diesel tank, an enlarged air filter, oil filter, and diesel filter, and automatic replenishment of lube oil. The automatic replenishment of lube oil is one of key factors for prolonging the maintenance interval for the communications machine set. Usually, an engine oil replenishment system is often disposed in the communications machine set. The engine oil replenishment system can automatically replenish lube oil in the communications machine set.

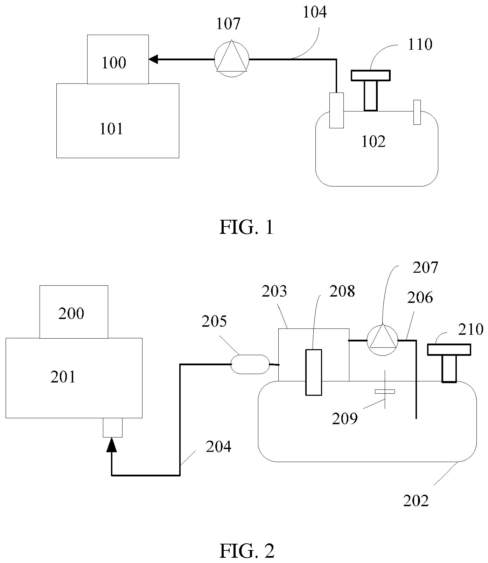

FIG. 1 is a schematic diagram of an engine oil replenishment system in the prior art. As shown in FIG. 1, the engine oil replenishment system includes an oil pan 101 and an auxiliary oil tank 102. The oil pan 101 is connected to the auxiliary oil tank 102 by using an oil replenishment tube 104, and the oil replenishment tube 104 is connected to the auxiliary oil tank 102 by using an oil pump 107. The auxiliary oil tank 102 is disposed with an oil inlet 110, and the oil inlet 110 is usually open. Based on such a structure, during implementation of automatic replenishment of lube oil, each time an engine of a machine set operates for two hours, the oil pump 107 pumps lube oil from the auxiliary oil tank 102 for once, where the pumping time is 4s, 7s, or the like, and transmits the lube oil to the oil pan 101 through the oil replenishment tube 104.

During implementation of the present invention, the inventor finds that the related art has at least the following problems:

Because the oil pan is connected to the auxiliary oil tank by using the oil replenishment tube, when a machine oil transportation machine set is mounted in the oil pan in advance, lube oil in the oil pan may flow into the auxiliary oil tank, easily resulting in an insufficient quantity of the lube oil in the oil pan. In addition, during operation of the engine, high-pressure gas generated by the operation of the engine arrives at the auxiliary oil tank through the oil replenishment tube, and is emitted from the oil inlet of the auxiliary oil tank, resulting in occurrence of white vapor at the oil inlet of the auxiliary oil tank.

### SUMMARY

To resolve the problems in the prior art, embodiments of the present invention provide an engine oil replenishment system and an oil replenishment method for an engine oil replenishment system. The technical solutions are as follows:

According to a first aspect, an engine oil replenishment system is provided, where the engine oil replenishment system includes: an oil pan, an auxiliary oil tank, and an oil replenishment chamber disposed on an upper portion of the auxiliary oil tank, where the oil pan is connected to the oil replenishment chamber by using an oil replenishment tube, the oil replenishment tube is disposed with a first one-way valve, the oil replenishment chamber is connected to the auxiliary oil tank by using an oil inlet tube, and the oil inlet tube is disposed with an oil pump, where
the oil pump pumps, in a preset mode of operation, oil from the auxiliary oil tank to the oil replenishment chamber through the oil inlet tube; and when an oil level of the oil replenishment chamber is higher than an oil level of the oil pan, the first one-way valve is opened, and the oil replenishment chamber replenishes oil to the oil pan through the oil replenishment tube.

With reference to the first aspect, in a first possible implementation of the first aspect, the auxiliary oil tank is divided into a first chamber and a second chamber by using a baffle plate, and the first chamber communicates with the second chamber by using a second one-way valve.

With reference to the first aspect, in a second possible implementation of the first aspect, the oil pan is connected to the oil replenishment chamber further by using a pressure equalizing tube.

With reference to the first aspect, in a third possible implementation of the first aspect, the engine oil replenishment system further includes a circulation cleaning tube, the circulation cleaning tube and the oil replenishment tube intersect at a first junction point, the first junction point is any point on the oil replenishment tube, the circulation cleaning tube and the oil inlet tube intersect at a second junction point, the second junction point is any point on the oil inlet tube, and a tube diameter of the circulation cleaning tube is less than a tube diameter of the oil replenishment tube.

With reference to the second possible implementation of the first aspect, in a fourth possible implementation of the first aspect, the engine oil replenishment system further includes an exhaust tube, the exhaust tube and the oil replenishment tube intersect at a third junction point, the third junction point is any point on the oil replenishment tube, the exhaust tube and the pressure equalizing tube intersect at a fourth junction point, and the fourth junction point is any point on the pressure equalizing tube.

With reference to any one of the first aspect to the fourth possible implementation of the first aspect, in a fifth possible implementation of the first aspect, an oil level sensor is disposed inside the auxiliary oil tank.

With reference to the first possible implementation of the first aspect, in a sixth possible implementation of the first aspect, a top portion of the second chamber is disposed with an oil inlet, and the oil inlet is disposed with a detachable closed cover.

According to a second aspect, an oil replenishment method for an engine oil replenishment system is provided, where the method is applied to the engine oil replenishment system according to any one of the first aspect to the seventh possible implementation of the first aspect, and the method includes:
pumping, by the oil pump, in a preset mode of operation, oil from the auxiliary oil tank to the oil replenishment chamber; and
when an oil level of the oil replenishment chamber is higher than an oil level of the oil pan, opening the first one-way valve, and replenishing, by the oil replenishment chamber, oil to the oil pan through the oil replenishment tube.

With reference to the second aspect, in a first possible implementation of the second aspect, the method further includes:
when the oil pump pumps oil from the auxiliary oil tank to the oil replenishment chamber, further pumping, by the oil pump, oil from the oil pan to the oil replenishment chamber through the circulation cleaning tube, where an oil quantity pumped by the oil pump from the oil pan is less than an oil quantity replenished by the oil replenishment chamber to the oil pan.

With reference to the second aspect, in a second possible implementation of the second aspect, the method further includes:
before an engine operates, discharging air in the oil replenishment tube through the exhaust tube.

The technical solutions provided in the embodiments of the present invention have the following beneficial effects:

The oil replenishment chamber is disposed to be connected to the oil pan by using the oil replenishment tube, and the oil replenishment tube is disposed with the first one-way valve. In addition, when the oil level of the oil replenishment chamber is higher than the oil level of the oil pan, the first one-way valve is opened, and the oil replenishment chamber replenishes oil to the oil pan through the oil replenishment tube. This not only ensures that the oil level in the oil replenishment chamber is level with that in the oil pan, so that an oil quantity in the oil pan is sufficient, but also ensures that the lube oil in the oil pan does not flow into the oil replenishment chamber or the auxiliary oil tank when a machine oil transportation machine set is mounted in the oil pan in advance, thereby ensuring sufficient lube oil in the oil pan. In addition, because the oil replenishment tube is disposed with the first one-way valve, high-pressure gas generated during the operation of the engine does not arrive at the auxiliary oil tank through the oil replenishment tube, and is not emitted from the oil inlet of the auxiliary oil tank, so that no white vapor is emitted from the oil inlet of the auxiliary oil tank.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an engine oil replenishment system in the prior art;
FIG. 2 is a schematic structural diagram of an engine oil replenishment system according to an embodiment of the present invention;
FIG. 3 is a schematic structural diagram of an engine oil replenishment system according to another embodiment of the present invention;
FIG. 4 is a schematic structural diagram of an engine oil replenishment system according to another embodiment of the present invention;
FIG. 5 is a schematic structural diagram of an engine oil replenishment system according to another embodiment of the present invention;
FIG. 6 is a schematic structural diagram of an engine oil replenishment system according to another embodiment of the present invention; and
FIG. 7 is a flowchart of an oil replenishment method for an engine oil replenishment system according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

FIG. 2 is a schematic structural diagram of an engine oil replenishment system according to an embodiment of the present invention. As shown in FIG. 2, the engine oil replenishment system provided in this embodiment of the present invention includes an oil pan 201, an auxiliary oil tank 202, and an oil replenishment chamber 203 disposed on an upper portion of the auxiliary oil tank 202.

The oil pan 201 is a lower half of a crankcase 200, and the oil pan 201 is configured to: close the crankcase 200 as a housing of an oil storage tank, prevent impurities from entering, collect and store lube oil flown back from friction surfaces of a diesel engine, dissipate some heat, prevent the lube oil from being oxidized, and the like. The auxiliary oil tank 202 is configured to store lube oil, and the lube oil stored in the auxiliary oil tank 202 can be used to replenish in real time the lube oil in the oil pan 201. The oil replenishment chamber 203 is configured to: temporarily store lube oil pumped by an oil pump 207 from the auxiliary oil tank 202, and when an oil level of the oil replenishment chamber 203 is higher than an oil level of the oil pan 201, replenish oil to the oil pan 201.

As shown in FIG. 2, the oil pan 201 is connected to the oil replenishment chamber 203 by using an oil replenishment tube 204, and the oil replenishment tube 204 is disposed with a first one-way valve 205. Use of the first one-way valve 205 ensures that the lube oil can flow only from the oil replenishment chamber 203 to the oil pan 201, and does not flow from the oil pan 201 back to the oil replenishment chamber 203.

The oil replenishment chamber 203 is connected to the auxiliary oil tank 202 by using an oil inlet tube 206, and the oil inlet tube 206 is disposed with the oil pump 207. The oil pump 207 may pump, in a preset mode of operation, oil from the auxiliary oil tank 202 to the oil replenishment chamber 203.

The pumping, by the oil pump 207, in a preset mode of operation, oil from the auxiliary oil tank 202 to the oil replenishment chamber 203 includes but is not limited to the following two manners:

Manner 1: When an oil level of the auxiliary oil tank 202 is higher than a preset threshold, the oil pump 207 pumps oil from the auxiliary oil tank 202 to the oil replenishment chamber 203.

A specific value of the preset threshold may be set as needed. This is not specifically limited in this embodiment of the present invention.

Manner 2: The oil pump 207 pumps oil from the auxiliary oil tank 202 to the oil replenishment chamber 203 every preset duration.

In this manner, a specific value of the preset duration is related to working duration of an engine, a capacity of the oil pan 201, a tube diameter of the oil inlet tube 206, oil pumping power of the oil pump 207, and the like. This is not specifically limited in this embodiment of the present invention.

The oil pump 207 is disposed to pump, in the preset mode of operation, oil from the auxiliary oil tank 202 to the oil replenishment chamber 203 through the oil inlet tube 206, so that oil can be automatically pumped to the oil replenishment chamber 203.

In addition, in this embodiment of the present invention, an overflow tube 208 is disposed inside the oil replenishment chamber 203, and an upper end of the overflow tube 208 falls within a preset oil level height range of the oil pan 201. The preset oil level height range of the oil pan 201 is an oil level height between a highest oil level and a lowest oil level that are allowed in the oil pan 201. Because the upper end of the overflow tube 208 is disposed to fall within the preset oil level height range of the oil pan 201, it can be ensured that the oil level in the oil replenishment chamber 203 is not higher than the upper end of the overflow tube 208, thereby maintaining the oil level in the oil replenishment chamber 203 at a fixed height. Based on this, because the oil replenishment chamber 203 is disposed to communicate with the oil pan 201 by using the oil replenishment tube 204, the oil level in the oil replenishment chamber 203 is level with that in the oil pan 201, thereby maintaining the oil level in the oil pan 201 at a fixed height, so that an oil quantity in the oil pan 201 is sufficient.

In this embodiment of the present invention, the oil pan 201 communicates with the oil replenishment chamber 203 by using the oil replenishment tube, so that when the oil level of the oil replenishment chamber 203 is higher than the oil level of the oil pan 201, the first one-way valve 205 is opened, and the oil replenishment chamber 203 replenishes oil to the oil pan 201 through the oil replenishment tube 204.

In addition, an oil level sensor 209 is further disposed inside the auxiliary oil tank 202. The oil level sensor 209 can detect in real time an oil level height in the auxiliary oil tank 202, to determine in real time whether the oil level in the auxiliary oil tank 202 is higher than the preset threshold.

According to the engine oil replenishment system shown in FIG. 2, the oil replenishment tube 204 is disposed with the first one-way valve 205. This ensures that the lube oil in the oil pan 201 does not flow into oil replenishment chamber 203 or the auxiliary oil tank 202 when a machine oil transportation machine set is mounted in the oil pan 201 in advance, thereby ensuring sufficient lube oil in the oil pan 201. In addition, because the oil replenishment tube 204 is disposed with the first one-way valve 205, high-pressure gas generated during the operation of the engine does not arrive at the auxiliary oil tank 202 through the oil replenishment tube 204, and is not emitted from the oil inlet 210 of the auxiliary oil tank 202, so that no white vapor is emitted from the oil inlet 210 of the auxiliary oil tank 202.

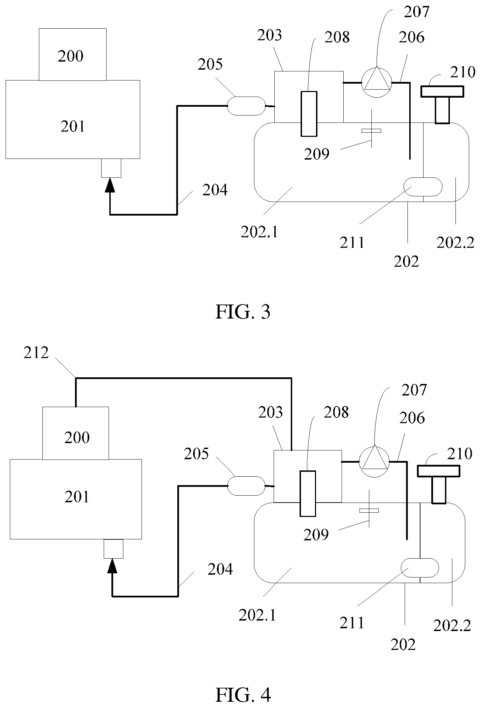

FIG. 3 is a schematic structural diagram of an engine oil replenishment system according to another embodiment of the present invention. The engine oil replenishment system shown in FIG. 3 is based on the engine oil replenishment system shown in FIG. 2, the auxiliary oil tank 202 is divided into a first chamber 202.1 and a second chamber 202.2 by using a baffle plate, and the first chamber 202.1 communicates with the second chamber 202.2 by using a second one-way valve 211. The second one-way valve 211 ensures that the lube oil in the auxiliary oil tank 202 can flow only from the second chamber 202.2 to 202.1, and does not flow in a reversed direction.

In addition, still as shown in FIG. 3, a top portion of the second chamber 202.2 is disposed with an oil inlet 210. When the first chamber 202.1 communicates with the second chamber 202.2 by using the second one-way valve 211, it is ensured that high-pressure gas generated during operation of an engine does not flow into the second chamber 202.2, and is not discharged from the oil inlet 210, thereby thoroughly preventing occurrence of white vapor.

Further, in this embodiment of the present invention, the oil inlet 210 may be disposed with a detachable closed cover. Based on this, during operation of the machine set, the closed cover may be used to close the oil inlet 210. In this case, it can also be ensured that the high-pressure gas generated during the operation of the engine is not discharged from the oil inlet 210, thereby also preventing the occurrence of white vapor.

It should be noted that, to prevent the occurrence of white vapor, the manner in which the auxiliary oil tank 202 is divided into the first chamber 202.1 and the second chamber 202.2 by using the baffle plate, and the first chamber 202.1 communicates with the second chamber 202.2 by using the second one-way valve 211, and the manner in which the oil inlet 210 is disposed with the closed cover, may be both used, or either manner may be used. This is not specifically limited in this embodiment of the present invention.

FIG. 4 is a schematic structural diagram of an engine oil replenishment system according to another embodiment of the present invention. The engine oil replenishment system shown in FIG. 4 is based on the engine oil replenishment system shown in FIG. 2 or FIG. 3, and the oil pan 201 is connected to the oil replenishment chamber 203 further by using a pressure equalizing tube 212.

Use of the pressure equalizing tube 212 to connect the oil pan 201 and the oil replenishment chamber 203 ensures balanced pressure between the oil pan 201 and the oil replenishment chamber 203 during operation of a machine set, and ensures that the oil replenishment chamber 203 can replenish oil to the oil pan 201 when the machine set is powered off or is operating.

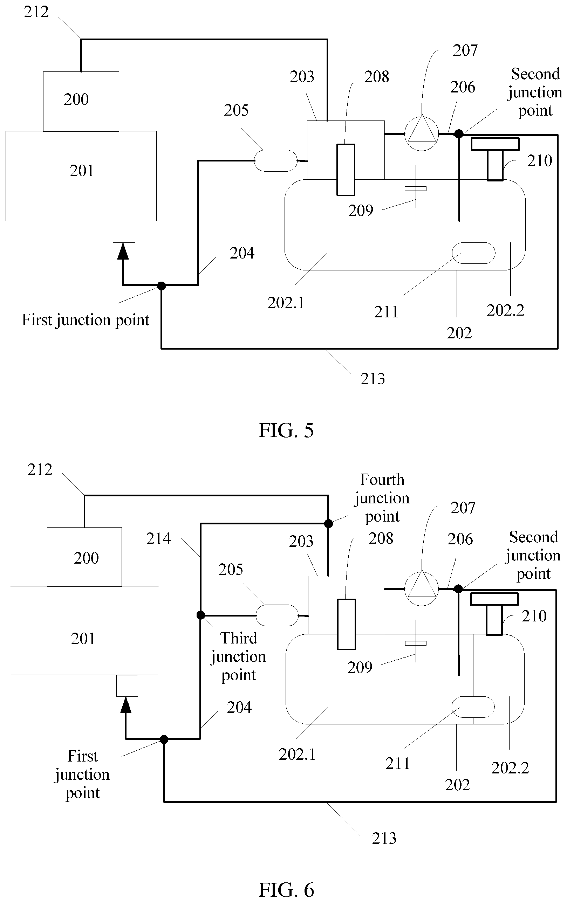

FIG. 5 is a schematic structural diagram of an engine oil replenishment system according to another embodiment of the present invention. The engine oil replenishment system shown in FIG. 5 is based on the engine oil replenishment system shown in FIG. 2, FIG. 3 or FIG. 4, and the engine oil replenishment system further includes a circulation cleaning tube 213. The circulation cleaning tube 203 and the oil replenishment tube 204 intersect at a first junction point, and the circulation cleaning tube 213 and the oil inlet tube 206 intersect at a second junction point. The first junction point is any point on the oil replenishment tube. For example, the first junction point is an endpoint that is on the oil replenishment tube 204 and at which the oil replenishment tube 204 is connected to the oil pan 201, or is any point on a middle portion of the oil replenishment tube 204. The second junction point is any point on the oil inlet tube 206. For example, the second junction point is an endpoint that is on the oil inlet tube 206 and at which the oil inlet tube 206 is connected to the oil replenishment chamber 203, or may be any point on a middle portion of the oil inlet tube 206.

With reference to FIG. 5, because the circulation cleaning tube 213 and the oil replenishment tube 204 intersect at the first junction point, and the circulation cleaning tube 213 and the oil inlet tube 206 intersect at the second junction point, when the oil pump 207 pumps oil from the auxiliary oil tank 202 to the oil replenishment chamber 203, the oil pump 207 further pumps some lube oil from the oil pan 201, and the lube oil flows back to the oil replenishment chamber 203 through the circulation cleaning tube 213, thereby implementing circulation cleaning of the lube oil in the oil pan 201.

Because the oil replenishment chamber 203 may replenish oil to the oil pan 201 when the oil pump 207 is pumping oil from the auxiliary oil tank 202 to the oil replenishment chamber 203 or after the oil pump 207 stops pumping oil from the auxiliary oil tank 202 to the oil replenishment chamber 203, when the oil pump 207 is pumping oil from the auxiliary oil tank 202 to the oil replenishment chamber 203, to implement oil replenishment from the oil replenishment chamber 203 to the oil pan 201, in this embodiment of the present invention, a tube diameter of the circulation cleaning tube 213 may be less than a tube diameter of the oil replenishment tube 204, to prevent the oil level in the oil pan 201 from being reduced too much.

FIG. 6 is a schematic structural diagram of an engine oil replenishment system according to another embodiment of the present invention. The engine oil replenishment system shown in FIG. 6 is based on the engine oil replenishment system shown in FIG. 4 or FIG. 5, and the engine oil replenishment system further includes an exhaust tube 214. The exhaust tube 214 and the oil replenishment tube 204 intersect at a third junction point, and the exhaust tube 214 and the pressure equalizing tube 212 intersect at a fourth junction point. The third junction point is any point on the oil replenishment tube 204. For example, the third junction point is an endpoint that is on the oil replenishment tube 204 and at which the oil replenishment tube 204 is connected to the oil pan 201, or may be any point on a middle portion of the oil replenishment tube 204. The fourth junction point is any point on the pressure equalizing tube 212. For example, the fourth junction point is an endpoint that is on the pressure equalizing tube 212 and at which the pressure equalizing tube 212 is connected to the oil replenishment chamber 203, or may be any point on a middle portion of the pressure equalizing tube 212.

Because air exists in the oil replenishment tube 204 before the engine operates, the exhaust tube 214 is disposed, the exhaust tube 214 and the oil replenishment tube 204 are disposed to meet at the third junction point, and the exhaust tube 214 and the pressure equalizing tube 212 are disposed to intersect at the fourth junction point. This ensures that the air in the oil replenishment tube 204 is discharged to the pressure equalizing tube 213 through the exhaust tube 214 before the engine operates, to discharge the air from the oil replenishment tube 204, thereby ensuring that oil is relatively smoothly replenished to the oil pan 201 through the oil replenishment tube 204.

It should be noted that the engine oil replenishment system provided in the embodiments corresponding to FIG. 2 to FIG. 6 can be applied to various machine sets, for example, a communications machine set such as a communications base station, or a generating set. This is not specifically limited in this embodiment of the present invention.

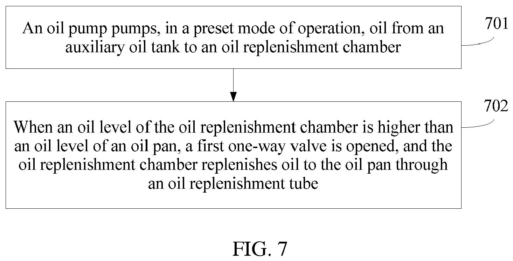

With reference to the engine oil replenishment system provided in any one of the embodiments corresponding to FIG. 2 to FIG. 6, an embodiment of the present invention further provides an oil replenishment method for an engine oil replenishment system. The oil replenishment method for an engine oil replenishment system may be applied to the engine oil replenishment system provided in any one of the embodiments corresponding to FIG. 2 to FIG. 6. As shown in FIG. 7, the oil replenishment method for an engine oil replenishment system provided in this embodiment of the present invention includes the following steps.
701. The oil pump pumps, in the preset mode of operation, oil from the auxiliary oil tank to the oil replenishment chamber.

Specific content of the preset mode of operation has been explained in the foregoing embodiment. For details, refer to the content in the foregoing embodiments. The details are not described herein again.
702. When the oil level of the oil replenishment chamber is higher than the oil level of the oil pan, the first one-way valve is opened, and the oil replenishment chamber replenishes oil to the oil pan through the oil replenishment tube.

With reference to the engine oil replenishment system shown in FIG. 2 to FIG. 6, because the oil pan communicates with the oil replenishment chamber by using the oil replenishment tube, it can be ensured that the first one-way valve is opened when the oil level in the oil replenishment chamber is higher than the oil level in the oil pan, thereby implementing oil replenishment from the oil replenishment chamber to the oil pan, and ensuring that the oil level in the oil pan always remains at a fixed height, so that an oil quantity in the oil pan is sufficient.

According to the method provided in this embodiment of the present invention, when the oil level of the auxiliary oil tank is higher than the preset threshold, the oil pump pumps, in the preset mode of operation, oil from the auxiliary oil tank to the oil replenishment chamber. When the oil level of the oil replenishment chamber is higher than the oil level of the oil pan, the first one-way valve is controlled to be opened, so that the oil replenishment chamber replenishes oil to the oil pan through the oil replenishment tube. In this way, a technology of automatically replenishing lube oil is implemented, so that the oil level in the oil pan is always level with the oil level in the oil replenishment chamber. In addition, the first one-way valve is disposed, so that the lube oil can flow only from the oil replenishment chamber to the oil pan during oil replenishment, thereby ensuring that the lube oil in the oil pan does not flow into the oil replenishment chamber or the auxiliary oil tank when the machine oil transportation machine set is mounted in the oil pan in advance, and ensuring sufficient lube oil in the oil pan. In addition, because the oil replenishment tube is disposed with the first one-way valve, high-pressure gas generated during the operation of the engine does not arrive at the auxiliary oil tank through the oil replenishment tube, and is not emitted from the oil inlet of the auxiliary oil tank, so that no white vapor is emitted from the oil inlet of the auxiliary oil tank.

In another embodiment, when the oil pump pumps oil from the auxiliary oil tank to the oil replenishment chamber, the oil pump further pumps oil from the oil pan to the oil replenishment chamber through the circulation cleaning tube.

Specifically, reference to FIG. 5, because the circulation cleaning tube and the oil replenishment tube intersect at the first junction point, and the circulation cleaning tube and the oil inlet tube intersect at the second junction point, when the oil pump pumps oil from the auxiliary oil tank to the oil replenishment chamber, the oil pump further pumps some lube oil from the oil pan, and the lube oil flows back to the oil replenishment chamber through the circulation cleaning tube, thereby implementing circulation cleaning of the lube oil in the oil pan.

Because the oil replenishment chamber may replenish oil to the oil pan when the oil pump is pumping oil from the auxiliary oil tank to the oil replenishment chamber, or after the oil pump stops pumping oil from the auxiliary oil tank to the oil replenishment chamber, when the oil pump is pumping oil from the auxiliary oil tank to the oil replenishment chamber, to implement oil replenishment from the oil replenishment chamber to the oil pan, an oil quantity pumped by the oil pump from the oil pan is less than an oil quantity replenished by the oil replenishment chamber to the oil pan.

In another embodiment, air in the oil replenishment tube may be discharged through the exhaust tube before the engine operates, thereby ensuring that oil is relatively smoothly replenished to the oil pan through the oil replenishment tube.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely examples of embodiments of the present invention, but are not intended to limit the present invention. Any modification, equivalent replacement, and improvement made without departing from the spirit and principle of the present invention shall fall within the protection scope of the present invention.

## Claims

1. An engine oil replenishment system, wherein the engine oil replenishment system comprises: an oil pan, an auxiliary oil tank, and an oil replenishment chamber disposed on an upper portion of the auxiliary oil tank, wherein the oil pan is connected to the oil replenishment chamber by using an oil replenishment tube, the oil replenishment tube is disposed with a first one-way valve, the oil replenishment chamber is connected to the auxiliary oil tank by using an oil inlet tube, and the oil inlet tube is disposed with an oil pump, wherein
the oil pump pumps, in a preset mode of operation, oil from the auxiliary oil tank to the oil replenishment chamber through the oil inlet tube; and when an oil level of the oil replenishment chamber is higher than an oil level of the oil pan, the first one-way valve is opened, and the oil replenishment chamber replenishes oil to the oil pan through the oil replenishment tube.

2. The engine oil replenishment system according to claim 1, wherein the auxiliary oil tank is divided into a first chamber and a second chamber by using a baffle plate, and the first chamber communicates with the second chamber by using a second one-way valve.

3. The engine oil replenishment system according to claim 1, wherein the oil pan is connected to the oil replenishment chamber further by using a pressure equalizing tube.

4. The engine oil replenishment system according to claim 1, wherein the engine oil replenishment system further comprises a circulation cleaning tube, the circulation cleaning tube and the oil replenishment tube intersect at a first junction point, the first junction point is any point on the oil replenishment tube, the circulation cleaning tube and the oil inlet tube intersect at a second junction point, the second junction point is any point on the oil inlet tube, and a tube diameter of the circulation cleaning tube is less than a tube diameter of the oil replenishment tube.

5. The engine oil replenishment system according to claim 3, wherein the engine oil replenishment system further comprises an exhaust tube, the exhaust tube and the oil replenishment tube intersect at a third junction point, the third junction point is any point on the oil replenishment tube, the exhaust tube and the pressure equalizing tube intersect at a fourth junction point, and the fourth junction point is any point on the pressure equalizing tube.

6. The engine oil replenishment system according to any one of claims 1 to 5, wherein an oil level sensor is disposed inside the auxiliary oil tank.

7. The engine oil replenishment system according to claim 2, wherein a top portion of the second chamber is disposed with an oil inlet, and the oil inlet is disposed with a detachable closed cover.

8. An oil replenishment method for an engine oil replenishment system, wherein the method is applied to the engine oil replenishment system according to any one of claims 1 to 7, and the method comprises:
pumping, by the oil pump, in a preset mode of operation, oil from the auxiliary oil tank to the oil replenishment chamber; and
when an oil level of the oil replenishment chamber is higher than an oil level of the oil pan, opening the first one-way valve, and replenishing, by the oil replenishment chamber, oil to the oil pan through the oil replenishment tube.

9. The method according to claim 8, wherein the method further comprises:
when the oil pump pumps oil from the auxiliary oil tank to the oil replenishment chamber, further pumping, by the oil pump, oil from the oil pan to the oil replenishment chamber through the circulation cleaning tube, wherein an oil quantity pumped by the oil pump from the oil pan is less than an oil quantity replenished by the oil replenishment chamber to the oil pan.

10. The method according to claim 8, wherein the method further comprises:
before an engine operates, discharging air in the oil replenishment tube through the exhaust tube.
